# EUROPÄISCHE PATENTANMELDUNG

(11) **EP 4 600 506 A1**
(43) Veröffentlichungstag der Anmeldung: **13.08.2025**
(21) Anmeldenummer: 25153878.1
(22) Anmeldetag: 24.01.2025
(51) Int. Cl.: F16B 5/02, F16B 25/00, F16B 35/06, E04B 1/00, E04B 2/00

(54) **VORRICHTUNG ZUM AUSRICHTEN VON BAUTEILEN UND ANORDNUNG**

(30) Priorität: 12.02.2024 DE 102024103836; 29.04.2024 DE 202024102183 U
(71) Anmelder: Adolf Würth GmbH & Co. KG, 74653 Künzelsau (DE)
(72) Erfinder: RÖVER, Dennis, 74653 Künzelsau (DE); WIED, Eberhard, 74427 Fichtenberg (DE)
(74) Vertreter: Patentanwälte Ruff, Wilhelm, Beier, Dauster & Partner mbB

(57) **Zusammenfassung**

Die Erfindung betrifft eine Vorrichtung zum Ausrichten von Bauteilen, insbesondere von Wandelementen, Wandscheiben oder Schwellen im Holzbau, mit einer Betonschraube, wobei die Betonschraube einen Schraubenschaft mit einem Gewinde und einen Schraubenkopf mit einer Antriebsausbildung aufweist, wobei eine Lastplatte vorgesehen ist, wobei die Betonschraube und die Lastplatte als separate Teile ausgebildet sind, wobei die Lastplatte eine mittige Antriebsausbildung aufweist, die an die Antriebsausbildung der Betonschraube angepasst ist, und wobei im montierten Zustand der Vorrichtung die mittige Antriebsausbildung der Lastplatte an der Antriebsausbildung der Betonschraube angreift oder in die Antriebsausbildung der Betonschraube eingreift, so dass von der Lastplatte auf die Betonschraube ein Drehmoment zum Einschrauben oder Ausschrauben des Gewindes der Betonschraube übertragbar ist.

## Beschreibung

Die Erfindung betrifft eine Vorrichtung zum Ausrichten von Bauteilen, insbesondere von Wandelementen, Wandscheiben oder Schwellen im Holzbau, mit einer Betonschraube, wobei die Betonschraube einen Schraubenschaft mit einem Gewinde und einen Schraubenkopf mit einer Antriebsausbildung aufweist. Die Erfindung betrifft auch eine Anordnung mit wenigstens zwei erfindungsgemäßen Vorrichtungen.

Aus der internationalen Offenlegungsschrift WO 2022/229183 A1 ist eine Vorrichtung zum Ausrichten von Wandelementen oder Wandscheiben im Holzbau, eine sogenannte Justierschraube, bekannt, wobei die Vorrichtung eine Betonschraube mit einem Schraubenschaft mit einem Gewinde und einem Schraubenkopf aufweist. Der Schraubenkopf ist kreisscheibenförmig ausgebildet und weist zwei im Abstand vom Schraubenschaft angeordnete Durchgangsöffnungen auf, die als Antriebsausbildung dienen.

Mit der Erfindung sollen eine Vorrichtung zum Ausrichten von Bauteilen und eine Anordnung verbessert werden.

Erfindungsgemäß ist hierzu eine Vorrichtung mit den Merkmalen von Anspruch 1 beziehungsweise eine Anordnung mit den Merkmalen von Anspruch 14 vorgesehen. Vorteilhafte Weiterbildungen der Erfindung sind in den jeweiligen Unteransprüchen angegeben.

Bei einer Vorrichtung zum Ausrichten von Bauteilen, insbesondere von Wandelementen, Wandscheiben oder Schwellen im Holzbau, mit einer Betonschraube, wobei die Betonschraube einen Schraubenschaft mit einem Gewinde und einen Schraubenkopf mit einer Antriebsausbildung aufweist, ist eine Lastplatte vorgesehen, wobei die Betonschraube und die Lastplatte als separate Teile ausgebildet sind, wobei die Lastplatte eine mittige Antriebsausbildung aufweist, die an die Antriebsausbildung der Betonschraube angepasst ist, und wobei im montierten Zustand der Vorrichtung die mittige Antriebsausbildung der Lastplatte an der Antriebsausbildung der Betonschraube angreift oder in die Antriebsausbildung der Betonschraube eingreift, so dass von der Lastplatte auf die Betonschraube ein Drehmoment zum Einschrauben oder Ausschrauben des Gewindes der Betonschraube übertragbar ist.

Indem die Lastplatte und die Betonschraube als separate Teile ausgebildet sind, kann die erfindungsgemäße Vorrichtung sehr flexibel eingesetzt werden. Beispielsweise kann eine handelsübliche Betonschraube mit einer Lastplatte versehen werden. Gegenüber bekannten Vorrichtungen bzw. Justierschrauben ist die erfindungsgemäße Vorrichtung wesentlich einfacher herstellbar, da die Betonschraube und die Lastplatte separat hergestellt und dann zusammengefügt werden können. Indem die mittige Antriebsausbildung der Lastplatte an der Antriebsausbildung der Betonschraube angreift oder in die Antriebsausbildung der Betonschraube eingreift, kann, obwohl die Lastplatte und die Betonschraube als separate Teile ausgebildet sind, von der Lastplatte auf die Betonschraube ein Drehmoment zum Einschrauben oder Ausschrauben des Gewindes der Betonschraube übertragen werden. In sehr einfacher Weise ist dadurch das Einstellen oder Einjustieren der Lastplatte auf ein gewünschtes Niveau möglich.

In Weiterbildung der Erfindung sind die mittige Antriebsausbildung der Lastplatte und die Antriebsausbildung der Betonschraube so ausgebildet, dass die Lastplatte relativ zum Schraubenschaft um Kippachsen senkrecht zur Mittellängsachse des Schraubenschafts um einen kleinen Winkel, insbesondere um einen Winkel zwischen +10° und -10°, verkippt werden kann.

Auf diese Weise kann beispielsweise die Lastplatte exakt horizontal ausgerichtet werden, auch wenn der Schaft der Betonschraube nicht exakt vertikal in ein Fundament eingeschraubt wurde. Darüber hinaus ist eine flächige Anlage der Lastplatte an dem ausgerichteten Bauteil möglich, auch wenn die Unterseite des Bauteils leicht schräg zu einem Fundament oder beispielsweise in einem Winkel von etwas mehr oder etwas weniger als 90° zum Schaft der Betonschraube ausgerichtet ist.

In Weiterbildung der Erfindung weist die Betonschraube, insbesondere der Kopf der Betonschraube, einen Auflageflansch zum Auflegen der Lastplatte auf, wobei der Auflageflansch auf seiner, der Lastplatte zugewandten Seite konvex abgerundet ausgebildet ist.

Mittels eines konvex abgerundet ausgebildeten Auflageflansches ist eine sichere Auflage der Lastplatte und dadurch auch eine sichere Kraftübertragung von der Lastplatte auf die Betonschraube möglich und gleichzeitig ist es nicht erforderlich, dass die Lastplatte exakt senkrecht zum Schraubenschaft der Betonschraube ausgerichtet ist.

In Weiterbildung der Erfindung sind die mittige Antriebsausbildung der Lastplatte und die Antriebsausbildung der Betonschraube so ausgebildet, dass bei Belastung der Lastplatte in Richtung auf das Gewinde des Schraubenschafts zu sich die mittige Antriebsausbildung der Lastplatte und die Antriebsausbildung der Betonschraube zu einem spielfreien Zustand hin verklemmen.

Auf diese Weise kann in einem belasteten Zustand eine spielfreie Anordnung von Lastplatte und Betonschraube sichergestellt werden. Beispielsweise ist die Antriebsausbildung der Betonschraube und/oder die mittige Antriebsausbildung der Lastplatte leicht konisch ausgebildet, so dass bei Belastung der Lastplatte in Richtung auf das Fundament zu, in das die Betonschraube eingeschraubt ist, sich die Lastplatte und die Betonschraube im Bereich ihrer Antriebsausbildungen verklemmen.

In Weiterbildung der Erfindung ist die mittige Antriebsausbildung der Lastplatte als Innenmehrkant, insbesondere Innensechskant, Innenvielrund, insbesondere Torx-Antrieb, RW-Antrieb oder AW-Antrieb, Innenvielzahn oder Innenstern und die Antriebsausbildung des Schraubenkopfs der Betonschraube als Außenmehrkant, insbesondere Außensechskant, Außenvielrund, Außenvielzahn oder Außenstern ausgebildet.

Die Antriebsausbildungen der Betonschraube und der Lastplatte können im Wesentlichen beliebig ausgebildet werden. Besonders vorteilhaft ist es, wenn die Betonschraube als Standard-Betonschraube mit einer Standard-Antriebsausbildung ausgebildet ist.

In Weiterbildung der Erfindung ist die Lastplatte, insbesondere die mittige Antriebsausbildung der Lastplatte, so ausgebildet, dass eine dem Schraubenschaft gegenüberliegende Oberseite der Lastplatte oberhalb einer Oberseite des Schraubenkopfs angeordnet ist.

Auf diese Weise kann die Lastplatte auch in einem mit der Betonschraube verbundenen Zustand eine ebene Auflage ohne hervorstehende Teile für das auszurichtende Bauteil bereitstellen.

In Weiterbildung der Erfindung weist die Lastplatte eine äußere Antriebsausbildung an ihrem Außenumfang auf.

Beispielsweise können am Außenumfang der Lastplatte abgerundete Vertiefungen zum Eingreifen von menschlichen Fingern angeordnet sein, der Außenumfang der Lastplatte kann in Form eines Außensechskants zum Angreifen eines Schraubenschlüssels ausgebildet sein oder es können Vertiefungen, insbesondere am Außenumfang angeordnet sein, um mit einem flachen Werkzeug zur Justierung eingreifen zu können, insbesondere radial zum Außenumfang der Lastplatte.

In Weiterbildung der Erfindung besteht die Lastplatte aus Stahl, insbesondere nichtrostender Stahl oder verzinkter Stahl, aus Nichteisenmetallen, insbesondere Aluminium, aus Kunststoff oder aus Holzwerkstoff, insbesondere Kunstharzpressholz, Furnierschichtholz oder dergleichen.

Je nach Anwendungsfall muss die Lastplatte lediglich beim Ausrichten des Bauteils eine statische Last übernehmen. Wird nach der Ausrichtung des Bauteils beispielsweise zwischen einer Unterseite des Bauteils und einer Oberseite des Fundaments eine Mörtelschicht vorgesehen, müssen die Lastplatte und die Betonschraube nach dem Aushärten des Mörtels keine statische Last in Gravitationsrichtung mehr übernehmen. Es ist dadurch problemlos möglich, die Lastplatte aus einem Werkstoff herzustellen, der lediglich eine begrenzte Tragfähigkeit aufweist. Wird die Lastplatte beispielsweise aus Kunststoff oder aus Holzwerkstoff, insbesondere Kunstharzpressholz oder Furnierschichtholz, hergestellt, kann die Lastplatte einen Einsatz aus Stahl oder aus Nichteisenmetallen, insbesondere Aluminium, aufweisen, der dann die mittige Antriebsausbildung der Lastplatte aufweist.

In Weiterbildung der Erfindung ist der Schraubenschaft der Betonschraube abschnittsweise von einem schlauchartigen Element aus elastisch und/oder plastisch deformierbarem Material umgeben, insbesondere Kunststoff oder Gummi, um zwischen einem Fundament und einer Unterseite des Schraubenkopfs und/oder einer Unterseite der Lastplatte im montierten Zustand eine Abdichtung gegenüber aufsteigender Feuchtigkeit bereitzustellen.

Auf diese Weise kann auch dann, wenn die erfindungsgemäße Vorrichtung dauerhaft zwischen dem Fundament und dem ausgerichteten Bauteil verbleibt, eine Abdichtung gegenüber aufsteigender Feuchtigkeit bereitgestellt werden. Zur Abdichtung gegen aufsteigende Feuchtigkeit in der Fläche kann eine Dichtfolie oder eine Dichtschicht, insbesondere aus EPDM, Gummi, TPU oder anderen modifizierten Kunststoffen, auf der Lastplatte angebracht sein. Die Dichtfolie oder Dichtschicht kann einseitig oder beidseitig selbstklebend ausgeführt sein.

In Weiterbildung der Erfindung ist die Lastplatte auf ihrer Oberseite mit reibungserhöhenden Elementen, insbesondere Vorsprüngen, versehen.

Beispielsweise weist die Oberseite der Lastplatte Spitzen auf, die in die Unterseite eines Bauteils, das auf der Lastplatte aufliegt, eindringen können. Auf diese Weise kann auch in Richtungen senkrecht zum Schraubenschaft der Betonschraube eine Fixierung eines auf der Lastplatte aufliegenden Bauteils erfolgen.

In Weiterbildung der Erfindung ist die Lastplatte auf ihrer Oberseite mit einer Abdichtung, insbesondere einer Dichtfolie oder Dichtscheibe, versehen.

Auf diese Weise kann verhindert werden, dass Wasser sich kapillar entlang der Lastplatte ausbreitet und gegebenenfalls kapillar in das Bauteil aufsteigt. Die Dichtfolie oder Dichtscheibe kann in eine flächige Abdichtung an einer Unterseite des Bauteils eingebunden sein oder an diese anschließen. Die Dichtfolie oder Dichtscheibe kann aus EPDM, Gummi, TPU oder anderen modifizierten Kunststoffen bestehen und einseitig oder zweiseitig selbstklebend ausgebildet sein.

In Weiterbildung der Erfindung ist ein Positionierkonus vorgesehen, der auf einer Oberseite der Lastplatte angeordnet ist, wobei die Oberseite der Lastplatte zum Aufliegen eines Bauteils vorgesehen ist und wobei sich der Positionierkonus in einer Richtung von der Oberseite der Lastplatte weg verjüngt.

Durch Vorsehen eines Positionierkonus auf der Oberseite der Lastplatte kann gleichzeitig mit dem Aufsetzen eines Bauteils auf die Lastplatte eine Ausrichtung der Lastplatte parallel zu einer Oberseite der Lastplatte vorgenommen werden. Hierzu muss in dem Bauteil eine kegelstumpfförmige Ausnehmung vorgesehen sein, in die der Positionierkonus eingreifen kann und die auf die Außenabmessungen des Positionierkonus abgestimmt ist. Beim Aufsetzen des Bauteils auf die Lastplatte richtet sich das Bauteil dadurch automatisch in Richtungen parallel zur Oberseite der Lastplatte aus, wenn die Umfangswand des Positionierkonus an die Innenwand der kegelstumpfförmigen Ausnehmung im Bauteil stößt. Mit dem Aufsetzen auf die Lastplatte kann das Bauteil somit automatisch in z-Richtung, also in Höhenrichtung, sowie auch in x- und y-Richtung, also parallel zur Oberseite der Lastplatte, ausgerichtet werden.

In Weiterbildung der Erfindung ist der Positionierkonus mit einem konzentrisch angeordneten, zylinderförmigen Vorsprung versehen.

Mittels eines solchen kreiszylinderförmigen Vorsprungs kann die Positionierung des Positionierkonus in der kegelstumpfförmigen Ausnehmung des Bauteils erleichtert werden. Die der Erfindung zugrunde liegende Aufgabe wird auch durch eine Anordnung mit wenigstens zwei erfindungsgemäßen Vorrichtungen, einem Bauteil und einem Fundament gelöst, wobei das Bauteil mit einer Unterseite auf Oberseiten der wenigstens zwei Lastplatten aufliegt und wobei die Betonschrauben der Vorrichtungen in das Fundament eingreifen.

In Weiterbildung der Erfindung ist wenigstens eine der Lastplatten in einem von 90° abweichenden Winkel zu dem Schraubenschaft der der Lastplatte zugeordneten Betonschraube angeordnet.

In Weiterbildung der Erfindung ist bei der erfindungsgemäßen Anordnung auf wenigstens einer der Lastplatten ein Positionierkonus vorgesehen, wobei das Bauteil ausgehend von seiner Unterseite mit wenigstens einer kegelstumpfförmigen Ausnehmung versehen ist und wobei der Positionierkonus in der kegelstumpfförmigen Ausnehmung aufgenommen ist.

Mit der erfindungsgemäßen Anordnung lässt sich dadurch eine Positionierung des Bauteils nicht nur in z-Richtung, also in Höhenrichtung, sondern auch in x- und y-Richtung, also parallel zur Oberseite der Lastplatte erreichen. Das Ausrichten des Bauteils in allen drei Achsenrichtungen erfolgt dabei automatisch beim Aufsetzen des Bauteils auf die Lastplatte. Die Ausrichtung in z-Richtung wird durch das Aufliegen der Unterseite des Bauteils auf der Oberseite der Lastplatte definiert. Die Ausrichtung in x- und y-Richtung wird durch das Zusammenwirken des Positionierkonus mit der kegelstumpfförmigen Ausnehmung in der Unterseite des Bauteils erreicht. Beim Aufsetzen wirkt die Außenwand des Positionierkonus mit der Wand der kegelstumpfförmigen Ausnehmung zusammen und bewegt dadurch das Bauteil automatisch in die vorgesehene Position, in der die Außenwand des Positionierkonus an der Innenwand der kegelstumpfförmigen Ausnehmung über den gesamten Umfang oder wenigstens über den Großteil des Umfangs anliegt.

Bei einem Verfahren zum Ausrichten eines Bauteils auf einem Fundament unter Verwendung von wenigstens zwei erfindungsgemäßen Vorrichtungen sind folgende Schritte vorgesehen : Anordnen von wenigstens zwei Betonschrauben der Vorrichtungen in einem Fundament, so dass das Gewinde der Betonschrauben wenigstens abschnittsweise in das Fundament eingreift, Nivellieren der Oberseiten der Lastplatten auf ein gemeinsames Niveau oder vordefinierte Niveaus mittels Drehen der Lastscheibe gemeinsam mit der Betonschraube und/oder Drehen der Betonschraube und anschließendes Aufsetzen der Lastscheibe und Aufsetzen des Bauteils auf die Oberseiten der Lastscheiben.

Das Verfahren erlaubt das automatische Ausrichten des Bauteils beim Aufsetzen auf die erfindungsgemäße Vorrichtung in allen drei Achsenrichtungen. Eine Ausrichtung in z-Richtung, also in Höhenrichtung, erfolgt durch das Aufliegen der Unterseite des Bauteils auf der Oberseite der Lastplatte. Das Ausrichten in x- und y-Richtung, also parallel zu einer Oberseite der Lastplatte, erfolgt durch das Zusammenwirken des Positionierkonus mit der kegelstumpfförmigen Ausnehmung in der Unterseite des Bauteils. Beim Aufsetzen eines Bauteils auf die Lastplatte liegt dann, wenn der Positionierkonus nicht exakt konzentrisch in die kegelstumpfförmige Ausnehmung in dem Bauteil eingeschoben wird, die Umfangswand des Positionierkonus zunächst nur einseitig an der Innenwand der kegelstumpfförmigen Ausnehmung an. Wird das Bauteil dann weiter in Richtung auf die Lastplatte bewegt, wird das Bauteil automatisch relativ zur Lastplatte seitlich verschoben, bis die Umfangswand des Positionierkonus flächig oder wenigstens über den Großteil ihres Umfangs an der Innenwand der kegelstumpfförmigen Ausnehmung im Bauteil anliegt. In sehr einfacher Weise kann dadurch das Bauteil relativ zu der erfindungsgemäßen Vorrichtung ausgerichtet werden.

Der Positionierkonus kann unter anderem aus folgenden Materialien hergestellt sein: Holz, Furnierschichtholz, Kunststoff, faserverstärkter Kunststoff, Kunstharzpressholz, Beton, Polymerbeton, Metall, insbesondere Aluminium, und dergleichen.

Weitere Merkmale und Vorteile der Erfindung ergeben sich aus den Ansprüchen und der folgenden Beschreibung bevorzugter Ausführungsformen im Zusammenhang mit den Zeichnungen. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine erfindungsgemäße Vorrichtung gemäß einer ersten Ausführungsform von schräg oben,
- Fig. 2: die Vorrichtung der Fig. 1 im auseinandergezogenen Zustand,
- Fig. 3: die Vorrichtung der Fig. 2 in einer Seitenansicht,
- Fig. 4: eine Draufsicht auf eine Lastplatte der Vorrichtung der Fig. 1 bis 3,
- Fig. 5: eine abschnittsweise Seitenansicht einer Betonschraube der Vorrichtung der Fig. 1 bis 3,
- Fig. 6: mehrere abschnittsweise Ansichten a, b, c einer Anordnung mit einem Fundament, einem Bauteil und einer Vorrichtung nach den Fig. 1 bis 3,
- Fig. 7: eine erfindungsgemäße Anordnung mit zwei Vorrichtungen gemäß den Fig. 1 bis 3, einem Fundament und einem Bauteil,
- Fig. 8: eine Ansicht einer Betonschraube für eine erfindungsgemäße Vorrichtung gemäß einer zweiten Ausführungsform,
- Fig. 9: die Betonschraube der Fig. 8 in einem ersten Zustand,
- Fig. 10: die Betonschraube der Fig. 8 in einem zweiten Zustand,
- Fig. 11: eine erfindungsgemäße Vorrichtung, die im Wesentlichen der Vorrichtung 10 der Fig. 1 entspricht,
- Fig. 12: eine erfindungsgemäße Vorrichtung gemäß einer weiteren Ausführungsform der Erfindung,
- Fig. 13: eine abschnittsweise schematische Schnittansicht der Vorrichtung der Fig. 12,
- Fig. 14: eine alternative Ausführungsform eines Positionierkonus für die Vorrichtung der Fig. 11 und 12,
- Fig. 15: eine abschnittsweise schematische Schnittansicht eines Bauteils zum Aufsetzen auf die Vorrichtung der Fig. 12 und 13,
- Fig. 16: mehrere Ansichten eines Positionierkonus für die erfindungsgemäße Vorrichtung,
- Fig. 17: mehrere aufeinanderfolgende Schritte beim Aufsetzen eines Bauteils auf die Vorrichtung der Fig. 12,
- Fig. 18: schematische Skizzen zur Verdeutlichung der Ausrichtfunktion der Vorrichtung der Fig. 12,
- Fig. 19: mehrere Darstellungen zur Verdeutlichung der Verwendung der erfindungsgemäßen Vorrichtung,
- Fig. 20: ein vorbereitetes Fundament mit einer erfindungsgemäßen Vorrichtung gemäß Fig. 12 vor dem Aufsetzen eines Bauteils und
- Fig. 21: die Anordnung der Fig. 20 bei aufgesetztem Bauteil.

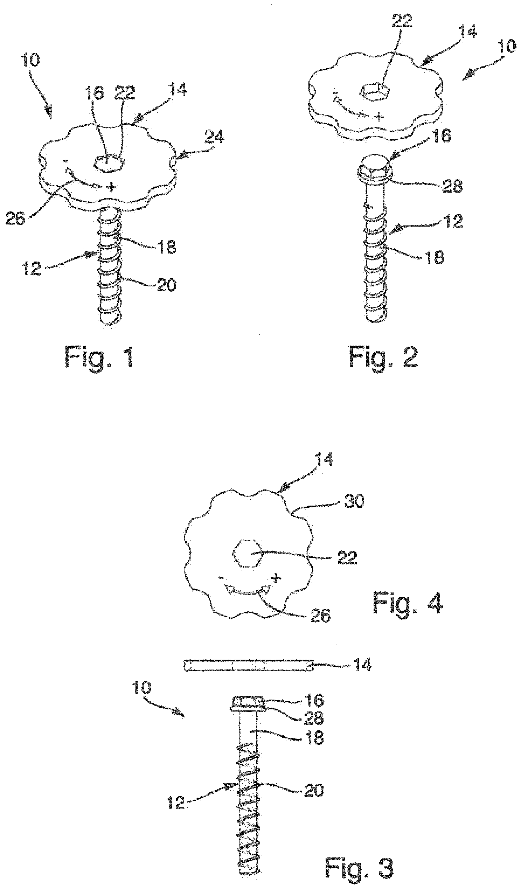

Fig. 1 zeigt eine erfindungsgemäße Vorrichtung zum Ausrichten von Bauteilen, insbesondere von Wandelementen, Wandscheiben oder Schwellen im Holzbau, mit einer Betonschraube 12 und einer Lastplatte 14. Die Lastplatte 14 ist auf einen Schraubenkopf 16 der Betonschraube aufgesetzt. Die Betonschraube 12 weist einen Schraubenschaft 18 mit einem Gewinde 20 auf, das als Betongewinde ausgebildet ist.

Die Lastscheibe 14 ist mit einer mittigen Antriebsausbildung 22 versehen. Die Antriebsausbildung 22 ist als Durchgangsöffnung durch die Lastscheibe 14 mit sechskantförmigem Umfang ausgebildet. Die Antriebsausbildung 22 ist auf eine Antriebsausbildung der Betonschraube 12 am Schraubenkopf 16 abgestimmt, wobei die Antriebsausbildung der Betonschraube 12 als Außensechskant ausgebildet ist, vgl. Fig. 2.

Die Lastplatte 14 ist darüber hinaus mit einer äußeren Antriebsausbildung 24 in Form mehrerer, gleichmäßig über ihren Außenumfang verteilter abgerundeter Ausnehmungen versehen. Diese Antriebsausbildung 24 bzw. die abgerundeten Vertiefungen der Antriebsausbildung 24 sind dafür vorgesehen, dass Finger einer menschlichen Hand, gegebenenfalls auch ein geeignetes Werkzeug, in die abgerundeten Vertiefungen eingreifen, um die Lastplatte 14 zu drehen. Auf der Oberseite der Lastplatte 14 ist ein gekrümmter Doppelpfeil 26 vorgesehen. Bei einer Drehung der Lastplatte 14 in Fig. 1 gegen den Uhrzeigersinn wird das Gewinde 20 der Betonschraube 12 aus einem Fundament herausgeschraubt, so dass die Höhe der Lastplatte 14 über dem Fundament zunimmt. Aus diesem Grund ist vor dem in Fig. 1 nach rechts gerichteten Pfeilende ein Plus vorgesehen.

Wird die Lastplatte 14 im Uhrzeigersinn gedreht, wird das Gewinde 20 der Betonschraube 12 weiter in das Fundament eingeschraubt. Die Höhe der Lastplatte 14 über dem Fundament verringert sich dadurch. Aus diesem Grund ist vor dem in Fig. 1 nach links zeigenden Ende des Doppelpfeils 26 ein Minus vorgesehen.

Die erfindungsgemäße Vorrichtung 10 wird so eingesetzt, dass zunächst die Betonschraube 12 in einem Fundament verankert wird, so dass der Schraubenkopf 16 noch oberhalb des Fundaments angeordnet ist. Daraufhin kann die Lastplatte 14 mit ihrer mittigen Antriebsausnehmung 22 auf die Antriebsausbildung am Schraubenkopf 16 aufgesetzt werden. Die Lastplatte 14 wird dann verdreht, um die Oberseite der Lastplatte 14, die in Fig. 1 erkennbar ist, auf ein gewünschtes Niveau einzustellen. Alternativ kann auch die Betonschraube 12 verdreht werden, bis das gewünschte Niveau des Schraubenkopfs 16 erreicht ist, und dann kann die Lastplatte 14 auf den Schraubenkopf 16 aufgesetzt werden.

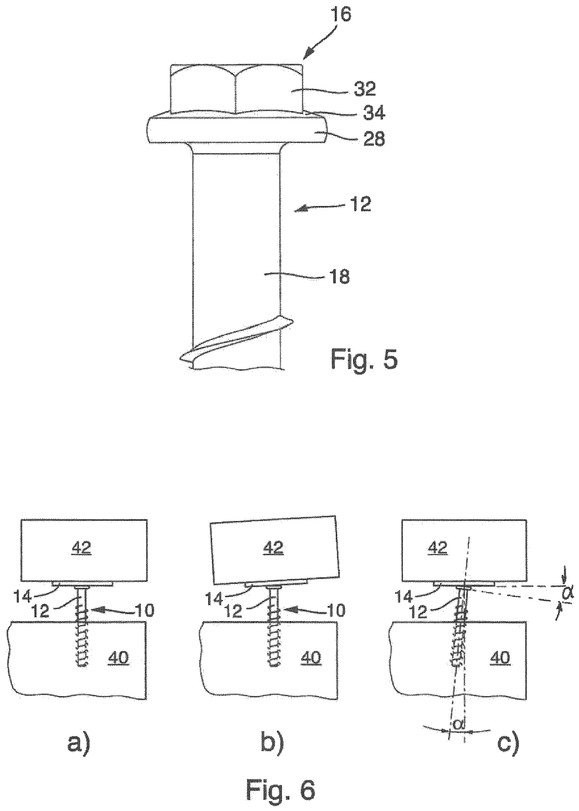

Eine Oberseite des Schraubenkopfs 16 ist geringfügig unterhalb der Oberseite der Lastplatte 14 angeordnet, wenn die Lastplatte 14 auf den Schraubenkopf 16 der Betonschraube 12 aufgesetzt ist. Ein auszurichtendes Bauteil, das auf die Oberseite der Lastplatte 14 aufgesetzt wird, siehe beispielsweise Fig. 6, kann dadurch auf der Lastplatte 14 aufliegen, ohne dass eine Oberseite des Schraubenkopfs 16 eine Unterseite des Bauteils berührt. Das Bauteil kann dadurch in einfacher Weise auf der Oberseite der Lastplatte 14 noch geringfügig verschoben werden. Im Rahmen der Erfindung kann aber auch vorgesehen sein, dass der Schraubenkopf 16 die Oberseite der Lastplatte 14 überragt, beispielsweise dann, wenn in Richtungen senkrecht zum Schraubenschaft 18 keine Verschiebung des Bauteils auf der Lastplatte 14 erforderlich ist.

Fig. 2 zeigt die Vorrichtung 10 der Fig. 1 in einem auseinandergezogenen Zustand. Im Zustand der Fig. 2 ist die Lastplatte 14 noch nicht auf den Schraubenkopf 16 der Betonschraube 12 aufgesetzt worden. Die mittige Antriebsausbildung 22 der Lastplatte 14 ist, wie ausgeführt wurde, in Form einer Durchgangsöffnung mit einer Berandung in Form eines regelmäßigen Sechsecks ausgeführt. Die Antriebsausbildung 22 kann zylindrisch ausgeführt sein, so dass die Berandung parallel zu einer Mittellängsachse der Antriebsausbildung 22 ausgebildet ist. Die Berandung der Antriebsausbildung 22 kann auch leicht konisch oder kegelstumpfförmig ausgebildet sein, so dass sich die Durchgangsöffnung, die die Antriebsausbildung 22 ausbildet, in Fig. 2 nach unten hin geringfügig erweitert. Dies erleichtert nicht nur das Aufsetzen der Lastscheibe 14 auf den Schraubenkopf 16 der Betonschraube 12, sondern bei entsprechender Ausbildung kann auch erreicht werden, dass die Antriebsausbildung 22 auf die Antriebsausbildung des Schraubenkopfs 16 leicht aufgesetzt werden kann und dann, wenn die Lastscheibe 14 weiter nach unten, in Richtung auf den Schraubenkopf 16 gedrückt wird, mit der Antriebsausbildung am Schraubenkopf 16 verklemmt.

Bei der dargestellten Ausführungsform ist die mittige Antriebsausbildung 22 der Lastplatte 14 aber so ausgebildet, dass sie mit einem gewissen Spiel auf der Antriebsausbildung am Schraubenkopf 16 sitzt. Das Spiel ist aber nicht so groß als dass die Lastscheibe 14 relativ zum Schraubenkopf 16 verdreht werden könnte, das Spiel ist aber gerade so groß, dass die Lastplatte 14 in dem auf den Schraubenkopf 16 aufgesetzten Zustand, siehe Fig. 1, um Kippachsen senkrecht zur Mittellängsachse des Schraubenschafts der Betonschraube 12 um einen kleinen Winkel verkippt werden kann, siehe Fig. 6b und Fig. 6c.

Die Betonschraube 12 kann als handelsübliche Betonschraube ausgebildet sein. Bei der dargestellten Ausführungsform weist die Betonschraube 12 einen sich in Richtung des Schraubenschafts 18 an den Schraubenkopf 16 anschließenden Auflageflansch 28 auf. Dieser Auflageflansch 28 bietet einen Anschlag beim Aufsetzen der Lastplatte 14 auf den Schraubenkopf 16 und ist darüber hinaus, siehe Fig. 5, konvex abgerundet ausgebildet, um auch beim Verkippen der Lastplatte 14 relativ zum Schaft der Betonschraube 12 eine sichere Auflage der Lastplatte 14 auf dem Auflageflansch 28 zu gewährleisten.

Fig. 3 zeigt eine Seitenansicht der Vorrichtung 10 im Zustand der Fig. 2, in dem also die Lastplatte 14 noch oberhalb des Schraubenkopfs 16 der Betonschraube 12 angeordnet ist.

Fig. 4 zeigt eine Draufsicht auf die Lastplatte 14. Zu erkennen ist in dieser Ansicht die mittige Antriebsausbildung 22 mit einer Berandung in Form eines regelmäßigen Sechsecks. Weiter zu erkennen ist, dass die äußere Antriebsausbildung 24 in gleichmäßigem Abstand über den Außenumfang der Lastplatte 14 verteilte abgerundete Ausnehmungen 30 aufweist. Schließlich ist in Fig. 4 der gekrümmte Doppelpfeil 26 zu erkennen.

Fig. 5 zeigt eine abschnittsweise Seitenansicht der Betonschraube 12 der Fig. 1 bis 3. Der Schraubenkopf 16 ist mit einer Antriebsausbildung 32 in Form eines Außensechskants versehen, wobei die Antriebsausbildung 22 in üblicher Weise ausgebildet ist.

Zwischen dem Schraubenkopf 16 und dem Schraubenschaft 18 ist der Auflageflansch 28 angeordnet, dessen Oberseite 34 konvex abgerundet ist. Die Oberseite 34 geht in die parallel zur Mittellängsachse des Schraubenschafts 18 angeordneten Seitenflächen der Antriebsausbildung 32 über.

Da die mittige Antriebsausbildung 22 der Lastscheibe 14, siehe beispielsweise Fig. 4, einen Innenumfang aufweist, der etwas größer ist als der Außenumfang der Antriebsausbildung 32, kann die Lastscheibe 14 dann, wenn sie auf den Schraubenkopf 16 aufgesetzt ist, geringfügig relativ zur Mittellängsachse des Schraubenschafts 18 verkippt werden, beispielsweise um einen Winkel von ± 10°. Dieses Verkippen wird durch die konvex abgerundete Oberseite 34 des Auflageflansches 28 erleichtert.

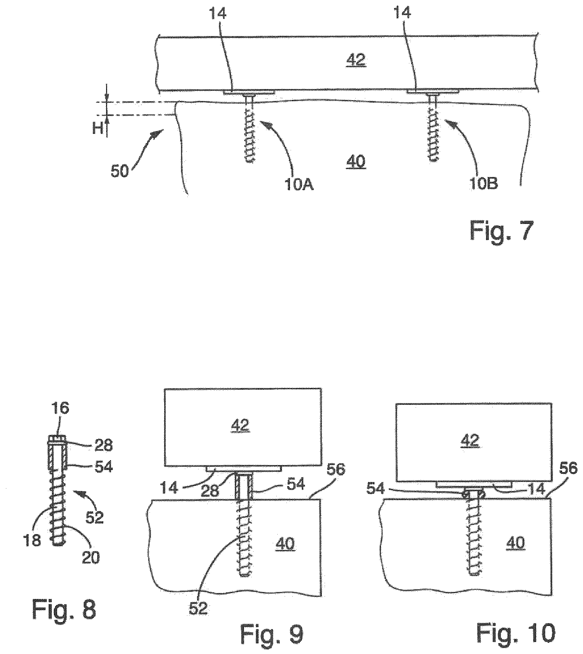

Fig. 6 zeigt drei abschnittsweise Ansichten einer Anordnung mit der erfindungsgemäßen Vorrichtung 10, einem Fundament 40 und einem auf der Lastscheibe 14 der Vorrichtung 10 aufliegenden Bauteil 42 in verschiedenen Zuständen. Im Zustand der Fig. 6a ist der Schaft der Betonschraube 12 senkrecht zu einer Oberseite des Fundaments 40 eingeschraubt worden. Die Lastscheibe 14 ist senkrecht zur Mittellängsachse des Schraubenschafts der Betonschraube 12 angeordnet. Eine Unterseite des Bauteils 42 liegt auf der Oberseite der Lastscheibe 14 auf und ist senkrecht zur Mittellängsachse des Schraubenschafts der Betonschraube 12 angeordnet. Eine Oberseite des Fundaments 40 ist in der Realität in der Regel nicht eben, sondern leicht gewellt. Beispielsweise ist das Fundament 40 als Bodenplatte eines Gebäudes ausgebildet. Ein Niveau der Oberseite einer solchen Bodenplatte ist nicht exakt gleich, sondern kann über die Größe der Bodenplatte über mehrere Zentimeter variieren, siehe auch Fig. 7. Die Darstellung der Fig. 6 ist daher rein schematisch und insbesondere ist die Darstellung der Oberseite des Fundaments 40 rein schematisch.

Fig. 6b zeigt einen Zustand, in dem der Schraubenschaft der Betonschraube 12 wieder senkrecht zur Oberseite des Fundaments 40 in dieses eingeschraubt wurde. Die Lastplatte 14 ist im Zustand der Fig. 6b aber leicht gekippt und damit schräg zur Mittellängsachse des Schraubenschafts der Betonschraube 12 angeordnet. Speziell ist in der Seitenansicht der Fig. 6b die linke Seite der Lastplatte 14 tiefer angeordnet als die rechte Seite der Lastplatte 14. Das Bauteil 42 liegt flächig auf der Oberseite der Lastplatte 14 auf. Eine Unterseite des Bauteils 42 ist leicht schräg zur Mittellängsachse des Schraubenschafts der Betonschraube 12 angeordnet. Eine in Fig. 6b linke Seite der Unterseite des Bauteils 42 ist näher am Fundament 40 angeordnet als die in Fig. 6b rechts angeordnete Seite der Unterseite des Bauteils 42. Die erfindungsgemäße Vorrichtung 10 kann dadurch auch dann, wenn eine Unterseite eines auszurichtenden Bauteils 42 nicht exakt senkrecht zu einer Mittellängsachse des Schraubenschafts der Betonschraube 12 liegt, eine flächige Auflage der Unterseite des Bauteils 42 auf einer Oberseite der Lastplatte 14 sicherstellen.

Fig. 6c zeigt einen Zustand, in dem eine Mittellängsachse des Schraubenschafts der Betonschraube 12 um einen Winkel α zur Vertikalen schräg in das Fundament 40 eingeschraubt wurde. Eine Unterseite des Bauteils 42 liegt flächig auf der Oberseite der Lastplatte 14 auf und die Unterseite des Bauteils 42 und die Lastplatte 14 sind senkrecht zur Vertikalen angeordnet. Die Lastplatte 14 ist in einem Winkel α schräg zu einer Linie angeordnet, die senkrecht zur Mittellängsachse des Schraubenschafts der Betonschraube 12 verläuft. Das schräge Aufliegen der Lastplatte 14 auf dem Schraubenkopf der Betonschraube 12 wird durch die erfindungsgemäße Ausgestaltung ermöglicht, insbesondere dadurch, dass die mittige Antriebsausbildung 22 der Lastplatte 14 spielbehaftet auf der Antriebsausbildung 32 des Schraubenkopfs 16 aufsitzt und dass eine Oberseite 34 des Auflageflanschs 28, siehe Fig. 5, der Betonschraube 12 konvex abgerundet ist.

Mit der erfindungsgemäßen Vorrichtung können dadurch ein Winkelversatz einer Mittellängsachse des Schraubenschafts der Betonschraube 12 zur Vertikalen und eine Abweichung einer Unterseite des Bauteils 42 von der Horizontalen kompensiert werden.

Fig. 7 zeigt eine erfindungsgemäße Anordnung 50 mit zwei erfindungsgemäßen Vorrichtungen 10A, 10B. Die Vorrichtungen 10A, 10B sind identisch ausgebildet zur Vorrichtung 10, die anhand der Fig. 1 bis 6 erläutert wurde. Die Betonschrauben der Vorrichtungen 10A, 10B sind im Abstand voneinander in das Fundament 40 eingeschraubt. In Fig. 7 ist schematisch und in übertriebener Weise dargestellt, dass eine Oberseite des Fundaments 40 nicht eben ist, sondern unterschiedliche Niveaus aufweist. In der Darstellung der Fig. 7 ändert sich das Niveau der Oberseite des Fundaments 40 um eine Höhe H. An der Stelle der Vorrichtung 10A ist eine Oberseite des Fundaments 40 somit um die Höhe H oberhalb des Niveaus der Oberseite des Fundaments 40 an der Stelle der Vorrichtung 10B angeordnet.

Das Bauteil 42 ist in Fig. 7 abschnittsweise dargestellt und beispielsweise als Wandelement, Wandscheibe oder auch Schwellholz ausgebildet. Das Bauteil 42 soll so auf dem Fundament 40 angeordnet werden, dass eine Unterseite, gegebenenfalls auch eine Oberseite des Bauteils 42, exakt horizontal ausgerichtet ist.

Um dies zu erreichen, werden die Oberseiten der Lastplatten 14 der Vorrichtungen 10A, 10B auf dasselbe Niveau eingestellt. Hierzu werden, wie bereits ausgeführt wurde, zunächst die Betonschrauben 12 der Vorrichtungen 10A, 10B im Abstand zueinander in die Oberseite des Fundaments 40 eingeschraubt. Nach dem Aufsetzen der Lastplatten 14 werden die Lastplatten 14 dann um die Mittellängsachse der jeweiligen Schraubenschäfte gedreht, bis die Oberseiten der Lastplatten 14 auf einem gemeinsamen Niveau angeordnet sind. Dieser Zustand ist in Fig. 7 dargestellt. Alternativ können die Oberseiten der Lastplatten 14 auch auf vorgegebene, unterschiedliche Niveaus eingestellt werden, beispielsweise dann, wenn die Unterseite des Bauteils 42 Stufen aufweist oder dergleichen. Die Betonschrauben 12 können auch vor dem Aufsetzen der Lastplatten 14 so eingestellt werden, dass die Auflageflansche 28 der Betonschrauben 12 auf demselben Niveau oder definierten Niveaus angeordnet sind.

Das Bauteil 42 kann nun auf die Oberseiten der Lastplatten 14 aufgesetzt werden und ist dadurch mit seiner Unterseite exakt horizontal ausgerichtet.

Nach dem Ausrichten des Bauteils 42 kann ein Zwischenraum zwischen der Unterseite des Bauteils 42 und der Oberseite des Fundaments 40 ausgestopft werden, beispielsweise mit Mörtel ausgestopft werden, der dann verfestigt. Im verfestigten Zustand des Mörtels müssen die Vorrichtungen 10A, 10B dann keine statische Funktion mehr übernehmen.

Fig. 8 zeigt eine Betonschraube 52 gemäß einer Ausführungsform der Erfindung. Die Betonschraube 52 ist an und für sich identisch zur Betonschraube 12 der Fig. 1 bis 7 ausgebildet, weist aber ein schlauchförmiges Element 54 auf, das unterhalb des Auflageflansches 28 den Schraubenschaft 18 umgibt und an dem Schraubenschaft 18 anliegt. Das Element 54 kann im Rahmen der Erfindung schlauchartig ausgebildet sein, beispielsweise nicht zylindrisch, sondern in Form eines Faltenbalgs oder Dichtungsanordnung. Eine Unterseite des schlauchförmigen Elements 54 endet kurz vor dem Beginn des Gewindes 20 auf dem Schaft der Betonschraube 52. Das schlauchförmige Element 54 ist infolgedessen in einem Abschnitt des Schraubenschafts 18 angeordnet, in dem dieser eine glattflächige Außenseite aufweist. Im Rahmen der Erfindung kann das schlauchförmige Element 54 aber auch bis in den Bereich des Gewindes 20 erstreckt werden und/oder das Gewinde 20 kann bis unmittelbar unter den Auflageflansch 28 gehen.

Fig. 9 zeigt eine abschnittsweise Ansicht einer Anordnung mit dem Fundament 40, der Betonschraube 52 der Fig. 8, einer auf den Schraubenkopf 16 der Betonschraube 52 aufgesetzten Lastplatte 14 und einem auf einer Oberseite der Lastplatte 14 aufliegenden Bauteil 42.

Das Fundament 40 ist auf seiner Oberseite mit einer Abdichtung 56 versehen, beispielsweise einer Bitumenbahn. Die Abdichtung soll kapillar aufsteigendes Wasser verhindern. An der Stelle, an der der Schraubenschaft der Betonschraube 52 die Abdichtung 56 durchsetzt, ist die Abdichtung 56 unterbrochen. Um dennoch zu verhindern, dass Feuchtigkeit aus dem Fundament 40 oder von einer Oberseite der Abdichtung 56 bis zum Bauteil 42 aufsteigt, liegt eine Unterseite des schlauchförmigen Elements 54 auf einer Oberseite der Abdichtung 56 auf. Gegebenenfalls wird eine Unterseite des schlauchförmigen Elements 54 leicht gegen die Oberseite der Abdichtung 56 gepresst. Das um den Schraubenschaft angeordnete schlauchförmige Element 54 soll die lokale Öffnung in der Abdichtung 56, mit anderen Worten in der Dichtebene, abdichten, damit keine Staunässe von unten durch die Abdichtung 56 drückt. Auch wenn das Anbringen des schlauchförmigen Elements 54 in den meisten Fällen nicht notwendig ist, bietet das Anbringen des schlauchförmigen Elements 54 eine Lösung für feuchte Untergründe.

Das schlauchförmige Element 54 ist elastisch und/oder plastisch verformbar. Dadurch kann ein Abstand zwischen einer Unterseite des Auflageflansches 28 und einer Oberseite des Fundaments 40 bzw. einer Oberseite der Abdichtung 56 variieren, ohne dass die Abdichtfunktion des schlauchförmigen Elements 54 beeinträchtigt wäre.

Fig. 10 zeigt einen Zustand der Anordnung der Fig. 9, in dem die elastische und/oder plastische Verformbarkeit des schlauchförmigen Elements 54 verdeutlicht ist. Die Lastplatte 14 ist im Zustand der Fig. 10 wesentlich näher an der Oberseite der Abdichtung 56 des Fundaments 40 angeordnet als im Zustand der Fig. 9. Das schlauchförmige Element 54 wurde plastisch und/oder elastisch verformt. Auch im verformten Zustand der Fig. 10 liegt eine Unterseite des schlauchförmigen Elements 54 auf einer Oberseite der Abdichtung 56 des Fundaments 40 an und verhindert dadurch, dass Feuchtigkeit aus dem Fundament 40 oder von einer Oberseite der Abdichtung 56 her in das Bauteil 42 aufsteigen kann.

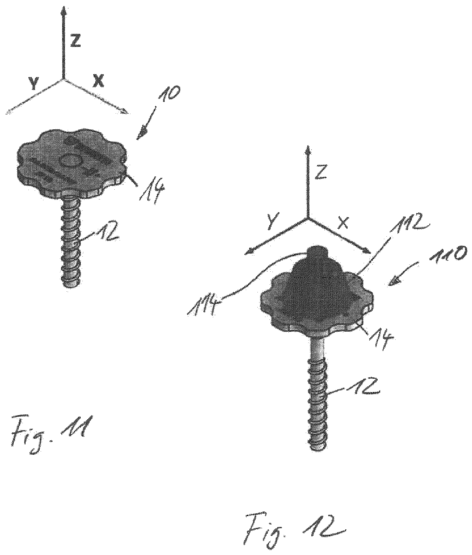

Fig. 11 zeigt die erfindungsgemäße Vorrichtung 10 der Fig. 1. Oberhalb der Vorrichtung 10 sind die z-Richtung oder Höhenrichtung sowie die y-Richtung und die x-Richtung eingezeichnet, wobei die y-Richtung und die x-Richtung parallel zur Oberseite der Lastplatte 14 verlaufen.

Mit der Vorrichtung 10 ist eine Ausrichtung eines auf die Lastplatte 14 aufgesetzten Bauteils in z-Richtung möglich. Mit dem Aufsetzen der Unterseite des Bauteils auf die Oberseite der Lastplatte 14 wird das Bauteil automatisch in z-Richtung ausgerichtet. Die Vorrichtung 10 kann also zum Justieren eines Bauteils in z-Richtung eingesetzt werden. In y- und x-Richtung ist, nachdem die Vorrichtung 10 an einem Fundament oder dergleichen angeordnet ist, nur noch dahingehend eine Ausrichtung des Bauteils möglich, dass dieses in der exakt vorgesehenen Position auf der Lastplatte 14 angeordnet wird. Ein solches Ausrichten sowohl der Vorrichtung 10 als auch des Bauteils auf der Lastplatte 14 muss händisch erfolgen. Durch leichte Hammerschläge kann das auf der Lastplatte 14 aufliegende Bauteil dann auch in y- und x-Richtung ausgerichtet werden.

Fig. 12 zeigt eine weitere erfindungsgemäße Vorrichtung 110, die weitgehend der Vorrichtung der Fig. 11 entspricht. Auf der Lastplatte 14 ist zusätzlich ein Positionierkonus 112 angeordnet. Der Positionierkonus 112 weist konzentrisch zu seiner Mittellängsachse einen kreiszylinderförmigen Vorsprung 114 auf, der auf das verjüngte Ende des Positionierkonus 112 aufgesetzt ist. Im Rahmen der Erfindung kann der kreiszylindrische Vorsprung auch entfallen. Der kreiszylindrische Vorsprung kann beispielsweise mittels einer Distanzmuffe gebildet sein, die auf ein metrisches Gewinde der Betonschraube aufgeschraubt ist. Diese Distanzmuffe hält den Positionierkonus dann auf der Lastplatte gegen Verschieben. Die Distanzmuffe kann über die Oberseite des Positionierkonus überstehen, kann bündig mit der Oberseite des Positionierkonus abschließen oder kann vertieft in dem Positionierkonus angeordnet sein. Der Positionierkonus verjüngt sich in einer Richtung von der Oberseite der Lastplatte 14 weg.

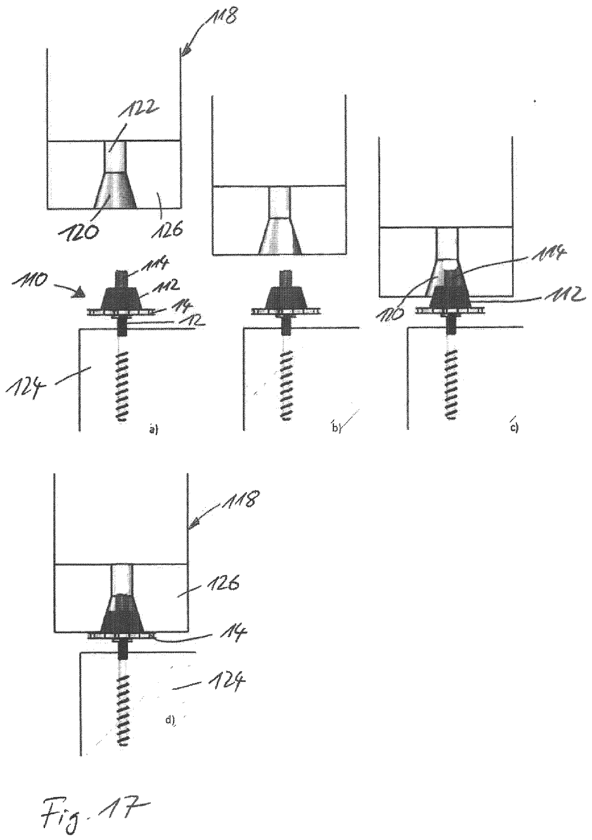

Eine Unterseite eines auf die Lastplatte 14 aufzusetzenden Bauteils ist, vgl. Fig. 17, mit einer kegelstumpfförmigen Ausnehmung versehen, die in Tiefe, Durchmesser und Kegelwinkel auf den Positionierkonus 112 abgestimmt ist. Zweckmäßigerweise entspricht der Kegelwinkel der kegelstumpfförmigen Ausnehmung dem Kegelwinkel des Positionierkonus 112 und die Innendurchmesser der kegelstumpfförmigen Ausnehmung sind so bemessen, dass der Positionierkonus 112 vollständig in der kegelstumpfförmigen Ausnehmung aufgenommen werden kann, aber nur ein sehr geringes Spiel zwischen der Außenwand des Positionierkonus 112 und der Innenwand der kegelstumpfförmigen Ausnehmung vorliegt.

Beim Aufsetzen eines Bauteils auf die Vorrichtung 110 dringt infolgedessen der Positionierkonus 112 in die kegelstumpfförmige Ausnehmung in der Unterseite des Bauteils ein, so dass dadurch, vgl. Fig. 17, das Bauteil relativ zur Lastplatte 14 in x-Richtung und in y-Richtung automatisch ausgerichtet wird.

Mit der erfindungsgemäßen Vorrichtung 110 kann ein auf die Lastplatte 14 aufgesetztes Bauteil damit automatisch in z-Richtung ausgerichtet werden. Diese Ausrichtung in z-Richtung, also in Höhenrichtung, erfolgt automatisch dadurch, dass die Unterseite des Bauteils auf der Oberseite der Lastplatte 14 aufliegt. Darüber hinaus wird durch den Positionierkonus 112 eine automatische Ausrichtung in x-Richtung und y-Richtung des Bauteils relativ zur Vorrichtung 110 beim Eindringen des Positionierkonus 112 in die kegelstumpfförmige Ausnehmung an der Unterseite des Bauteils bewirkt, vgl. Fig. 17.

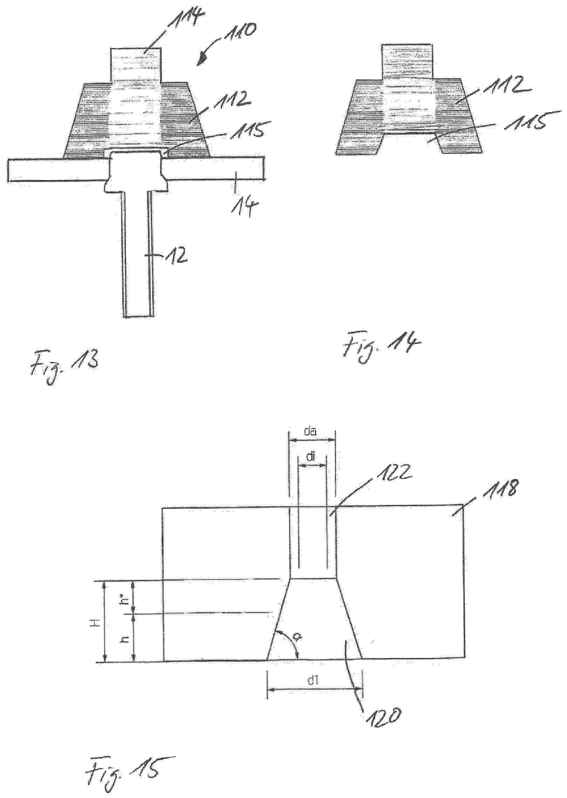

Fig. 13 zeigt eine schematische Schnittansicht der Vorrichtung 110 der Fig. 12. Es ist zu erkennen, dass der Positionierkonus 112 mit seiner Unterseite auf der Oberfläche der Lastplatte aufliegt. Der kreiszylindrische Vorsprung 114 ist bei der dargestellten Ausführungsform einstückig mit dem Positionierkonus 112 ausgebildet. Im Rahmen der Erfindung kann der kreiszylindrische Vorsprung auch entfallen. Der Positionierkonus 112 kann in beliebiger Weise mit der Oberseite der Lastplatte 14 verbunden sein, beispielsweise mit der Lastplatte 14 verklebt sein oder auch einstückig mit der Lastplatte 14 ausgebildet sein. Es ist selbstverständlich auch möglich, den Positionierkonus 112 mittels Schrauben mit der Lastplatte 14 zu verbinden. Alternativ kann die Betonschraube 12 einen von dem Kopf der Betonschraube 12 ausgehenden Vorsprung aufweisen, der sich in eine passende Bohrung im Positionierkonus 112 hineinerstreckt.

Bei der dargestellten Ausführungsform ragt der Kopf der Betonschraube 12 ein Stück weit über die Oberseite der Lastplatte 14 hinaus. An seiner Unterseite weist der Positionierkonus 112 aus diesem Grund eine Ausnehmung 115 auf, in die die Oberseite des Kopfs der Betonschraube 12 hineinragt. Der Positionierkonus 112 wird dadurch automatisch lagerichtig auf der Lastplatte 14 angeordnet, wenn sich die Oberseite des Kopfs der Betonschraube 12 in die Ausnehmung 115 hineinerstreckt.

Fig. 14 zeigt eine weitere Ausführungsform des Positionierkonus 112. Die Ausnehmung 115 ist dabei kegelstumpfförmig ausgebildet und kann beispielsweise mit einem passend gestalteten, kegelstumpfförmigen Kopf oder einem kegelstumpfförmigen Fortsatz am Kopf der Betonschraube 12 zusammenwirken, um den Positionierkonus lagerichtig auf der Lastplatte 14 zu positionieren.

Im Rahmen der Erfindung kann der Positionierkonus 112 eine Mittelbohrung aufweisen. In eine solche Mittelbohrung kann sich ein Vorsprung, der vom Kopf der Betonschraube 12 ausgeht, hineinerstrecken, um den Positionierkonus 112 lagerichtig auf der Lastplatte 14 zu positionieren. Alternativ kann in die Mittelbohrung des Positionierkonus 112 auch eine Schraube oder ein Befestigungsbolzen eingesetzt werden, der dann in eine passende Gewindebohrung im Kopf der Betonschraube 112 eingeschraubt wird.

Fig. 15 zeigt eine abschnittsweise Darstellung eines Bauteils, beispielsweise eine untere Schwelle einer Holzwand 118, die mit einer kegelstumpfförmigen Ausnehmung 120 versehen ist, die von einer Unterseite der Holzwand 118 ausgeht. Die kegelstumpfförmige Ausnehmung 120 wird mittels einer zylindrischen Bohrung 122 fortgesetzt. Dadurch ist eine Durchgangsöffnung durch einen Abschnitt der Holzwand 118 bereitgestellt, beispielsweise eine Durchgangsöffnung durch eine untere Schwelle der Holzwand 118. Im Rahmen der Erfindung muss die zylindrische Bohrung 122 sich nicht durch einen Abschnitt der Holzwand 118 hindurcherstrecken, sondern kann auch als Sackloch ausgebildet sein.

Der Kegelwinkel α, der Anfangsdurchmesser d1 und der Enddurchmesser da der kegelstumpfförmigen Ausnehmung 120 sind auf den Kegelwinkel, den Anfangsdurchmesser und den Enddurchmesser des Positionierkonus 112 abgestimmt, so dass der Positionierkonus 112 vollständig in der kegelstumpfförmigen Ausnehmung 120 aufgenommen werden kann, aber nur ein geringes Spiel zwischen der Außenwand des Positionierkonus 112 und der Innenwand der kegelstumpfförmigen Ausnehmung 120 vorliegt. Dadurch kann beim Aufschieben der Holzwand 118 auf die Vorrichtung 110, mit anderen Worten beim Aufschieben der kegelstumpfförmigen Ausnehmung 120 auf den Positionierkonus 112, das Bauteil, also die Holzwand 118, automatisch relativ zu der Vorrichtung 110 ausgerichtet werden. Diese Ausrichtung erfolgt dabei in z-Richtung dadurch, dass die Unterseite der Holzwand 118 abschnittsweise auf der Oberseite der Lastplatte zu liegen kommt, und in x-Richtung und in y-Richtung dadurch, dass durch die aufeinander auflaufende kegelstumpfförmige Außenwand des Positionierkonus 112 und die ebenfalls kegelstumpfförmige Innenwand der kegelstumpfförmigen Ausnehmung 120 die Holzwand 118 seitlich verschoben wird, bis der Positionierkonus 112 vollständig in der kegelstumpfförmigen Ausnehmung 120 aufgenommen ist. Eine seitliche Verschiebung der Holzwand 118 erfolgt selbstverständlich dann nicht, wenn der Positionierkonus 112 exakt konzentrisch in die kegelstumpfförmige Ausnehmung 120 eingeschoben wird. Mit di ist der Durchmesser des kreiszylindrischen Vorsprungs 114 der Vorrichtung 110 angedeutet, vgl. Fig. 12 und Fig. 13.

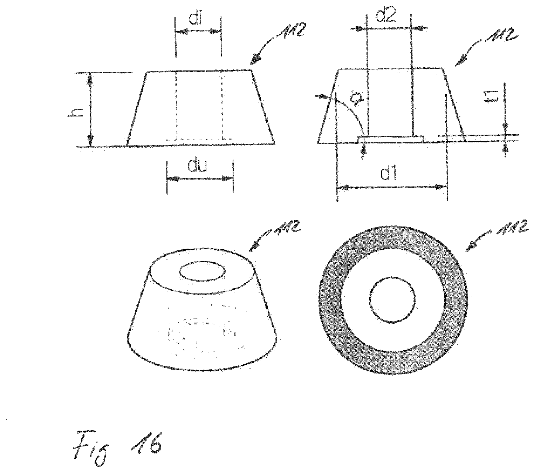

Fig. 16 zeigt mehrere Ansichten eines Positionierkonus 112. Der Positionierkonus 112 der Fig. 16 ist im Unterschied zu dem Positionierkonus 112 der Fig. 13 und 14 mit einer mittigen Durchgangsbohrung versehen. Im Übrigen ist der Positionierkonus 112 der Fig. 16 aber gleich ausgebildet wie die Positionierkonen 112 der Fig. 13 und 14. Es ist zu erkennen, dass der Kegelwinkel α des Positionierkonus 112 dem Kegelwinkel α der kegelstumpfförmigen Ausnehmung 120, siehe Fig. 15, entspricht.

Im Rahmen der Erfindung kann, wie bereits erläutert wurde, der Positionierkonus 112 ohne Mittelbohrung ausgeführt sein und dann in beliebiger Weise auf der Oberseite der Lastplatte fixiert sein.

Fig. 17 zeigt mehrere aufeinanderfolgende Schritte a, b, c und d beim Aufsetzen eines Bauteils, beispielsweise einer Holzwand 118, auf die Vorrichtung 110, die in einem Fundament 124 befestigt ist.

Die Holzwand 118 ist mit einer unteren Schwelle 126 versehen, wobei die Schwelle 126 mit der kegelstumpfförmigen Ausnehmung 120 und der zylindrischen Bohrung 122 versehen ist, die bereits anhand der Fig. 15 erläutert wurden. Die kegelstumpfförmige Ausnehmung 120 und die zylindrische Bohrung 122 bilden eine Durchgangsöffnung, die die Schwelle 126 vollständig durchsetzt. Im Rahmen der Erfindung kann, wie ausgeführt wurde, die zylindrische Bohrung 122 auch als Sackloch ausgebildet sein.

Im Zustand a und auch im Zustand b ist die Schwelle 126 noch oberhalb des Endes des zylindrischen Vorsprungs 114 der Vorrichtung 110 angeordnet.

Ausgehend vom Zustand a wird die Holzwand 118 in den Zustand b und weiter in den Zustand c abgesenkt, bis der kreiszylindrische Vorsprung 114 und der Positionierkonus 112 wenigstens abschnittsweise in der kegelstumpfförmigen Ausnehmung 120 angeordnet sind. Wenn das obere Ende des kreiszylindrischen Vorsprungs 114 dabei an die Innenwand der kegelstumpfförmigen Ausnehmung 120 anschlägt, erfolgt dadurch bereits eine Ausrichtung der Holzwand 118 parallel zur Lastplatte der Vorrichtung 110. Der zylindrische Vorsprung kann hierzu eine verjüngte und am Ende abgerundete Spitze aufweisen, um diese Ausrichtung zu erleichtern. Die kegelstumpfförmige Ausnehmung 120 und die zylindrische Bohrung 122 in der Schwelle 126 sind dabei so bemessen, dass dann, wenn der kreiszylindrische Vorsprung 114 abschnittsweise in die zylindrische Bohrung 122 eingeführt ist, beim Absenken der Holzwand 118, siehe Zustand c, das große, untere Ende der kegelstumpfförmigen Ausnehmung 120 automatisch auf das kleine, obere Ende des Positionierkegels 112 gelangt.

Dieser Zustand c führt dazu, dass beim weiteren Absenken der Holzwand 118 ausgehend vom Zustand c die Holzwand 118 bzw. die Schwelle 126 der Holzwand 118 automatisch parallel zur Lastplatte 14, also in x-Richtung und y-Richtung, verschoben wird, bis im Zustand d eine Unterseite der Schwelle 126 auf der Lastplatte 14 aufliegt. Dies wird durch das Zusammenwirken der Kegelstumpfflächen des Positionierkonus 112 und der kegelstumpfförmigen Ausnehmung 120 bewirkt. Der Darstellung des Zustands d ist zu entnehmen, dass eine Außenwand des Positionierkonus 112 nun flächig an der Innenwand der kegelstumpfförmigen Ausnehmung anliegt. Darüber hinaus ist zu erkennen, dass der kreiszylindrische Vorsprung 114 konzentrisch zu der zylindrischen Bohrung 122 ausgerichtet ist, aber nur abschnittsweise in die zylindrische Bohrung 122 hineinragt. Weiter ist zu erkennen, dass die Unterseite der Schwelle 126 auf der Oberseite der Lastplatte 14 aufliegt. Im Zustand d ist die Holzwand 118 damit in der vorgesehenen Art und Weise relativ zur Vorrichtung 110 und relativ zum Fundament 124 ausgerichtet, nämlich in Höhenrichtung, also in z-Richtung, sowie auch parallel zu einer Oberseite des Fundaments 124 bzw. parallel zur Lastplatte 14, also in x-Richtung und in y-Richtung.

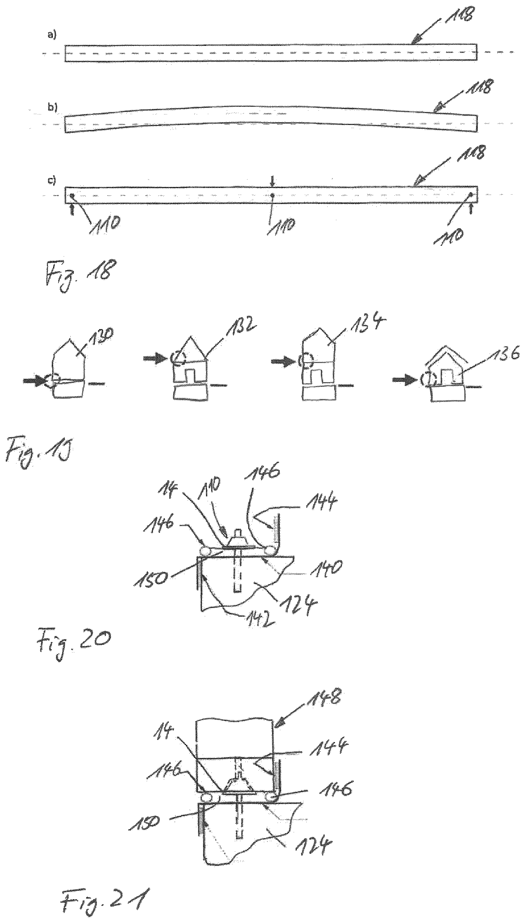

Fig. 18 zeigt drei Beispiele a, b, c, wie eine Holzwand 118 nicht verformt oder verformt sein kann und wie eine solche Verformung mittels der erfindungsgemäßen Vorrichtungen 110 korrigiert werden kann.

Fig. 18a zeigt eine nicht verformte Holzwand 118, die also exakt eben ausgeführt ist.

Fig. 18b zeigt eine, beispielsweise während der Fertigung, der Lagerung oder dem Transport der Holzwand 118, verformte Holzwand 118, die eine durchgängige Krümmung und damit eine Abweichung von der idealen Form in Fig. 18a zeigt.

Gemäß Fig. 18c wird die Holzwand 118 auf drei Vorrichtungen 110 abgesetzt. Die Krümmung der Holzwand 118 in Fig. 18b wird dadurch automatisch korrigiert. Dies dadurch, dass die Unterseite der Holzwand 118 auf die Positionierkonen der Vorrichtungen 110 aufgeschoben wird, wie anhand der Fig. 17 erläutert wurde.

Fig. 18c ist zu entnehmen, dass die Krümmung der Holzwand 118 in Fig. 18b beim Aufsetzen auf die Positionierkonen der Vorrichtungen 110 automatisch korrigiert wurde und die Holzwand 118 im auf die Vorrichtungen 110 aufgesetzten Zustand wieder exakt eben ist.

Fig. 19 zeigt mehrere unterschiedliche Verwendungen der erfindungsgemäßen Vorrichtungen 110. Die Vorrichtungen 110 können auf einen Sockel eines Hauses 130 aufgesetzt werden, die Vorrichtungen 110 können auf eine Traufe 132 eines Gebäudes aufgesetzt werden, die Vorrichtungen 110 können beim Aufsetzen einer Aufstockung 134 auf ein bestehendes Gebäude eingesetzt werden und die Vorrichtungen 110 können dazu verwendet werden, eine Fassade 136 vor ein bestehendes Gebäude zu setzen. In allen Fällen kann durch die erfindungsgemäßen Vorrichtungen 110 oder 10 eine Ausrichtung zumindest in z-Richtung, also in Höhenrichtung, oder sogar in allen drei Raumrichtungen, also in x-, y- und z-Richtung, erfolgen.

Fig. 20 zeigt eine abschnittsweise Darstellung des Fundaments 124 der Fig. 17 mit einer in eine Oberseite des Fundaments 124 eingesetzten Vorrichtung 110. Vor dem Einsetzen der Vorrichtung 110 in das Fundament 124 wird eine wasserdichte Folie 140 auf einem Abschnitt der Oberseite des Fundaments 124 ausgelegt und die Vorrichtung 110 wird durch die wasserdichte Folie 140 in das Fundament 124 eingeschraubt. Die wasserdichte Folie 140 sorgt für eine Abdichtung gegenüber aus dem Fundament 124 kapillar aufsteigender Feuchtigkeit.

Die wasserdichte Folie 140 ist ein Stück weit um die senkrechte äußere Begrenzungswand 142 geschlagen und an dieser äußeren Begrenzungswand mittels eines Bitumenklebebands oder eines sonstigen Klebebands befestigt.

Ein weiterer Abschnitt der wasserdichten Folie 140 ist senkrecht nach oben umgeschlagen und ebenfalls mit einem Bitumenklebeband 144 oder einem sonstigen Klebeband versehen. Dieser Abschnitt der wasserdichten Folie 140 ist dafür vorgesehen, vgl. Fig. 21, an eine Innenseite eines Wandelements angeklebt zu werden.

Zu beiden Seiten der Vorrichtung 110 sind Einfüllhilfen 146, beispielsweise aus Kunststoff, insbesondere aus Schaumkunststoffen, insbesondere in Form von Moosgummistreifen oder Moosgummirohren, vorgesehen. Die Oberseiten der Einfüllhilfen 146 liegen auf Höhe der Oberseite der Lastplatte 14 oder leicht unterhalb der Oberseite der Lastplatte 14.

Vor dem Aufsetzen des Wandelements 148 auf die Vorrichtung 110, siehe Fig. 21, wird ein fließfähiger Quellmörtel 150 zwischen die Einfüllhilfen 146 eingefüllt. Der fließfähige Quellmörtel kann sich gleichmäßig verteilen und muss nicht aufwändig seitlich in eine Fuge zwischen der Unterseite des Wandelements 148 und der Oberseite des Fundaments 124 gestopft werden. Eine Oberfläche des Quellmörtels 150 liegt vor dem Aufsetzen des Wandelements 148 maximal auf der Höhe der Oberseite der Lastplatte 14.

Anschließend an den Zustand der Fig. 20, in dem der Quellmörtel 150 bereits eingefüllt ist, wird das Wandelement 148 in der beschriebenen Weise auf die Vorrichtung 110 abgesetzt und dadurch, vgl. Fig. 17, automatisch relativ zu der Vorrichtung 110 und damit relativ zum Fundament 124 ausgerichtet.

Nach dem Aufsetzen wird das Klebeband 144 an die Innenseite des Wandelements 148 angeklebt. Der Quellmörtel 150 härtet aus und quillt dabei insbesondere auf. Im Zustand der Fig. 21 ist dadurch eine wasserdichte und winddichte Abdichtung zwischen einer Unterseite des Wandelements 148 und einer Oberseite des Fundaments 124 geschaffen.

## Patentansprüche

1. Vorrichtung zum Ausrichten von Bauteilen, insbesondere von Wandelementen, Wandscheiben oder Schwellen im Holzbau, mit einer Betonschraube, wobei die Betonschraube einen Schraubenschaft mit einem Gewinde und einen Schraubenkopf mit einer Antriebsausbildung aufweist, **dadurch gekennzeichnet, dass** eine Lastplatte vorgesehen ist, wobei die Betonschraube und die Lastplatte als separate Teile ausgebildet sind, wobei die Lastplatte eine mittige Antriebsausbildung aufweist, die an die Antriebsausbildung der Betonschraube angepasst ist, und wobei im montierten Zustand der Vorrichtung die mittige Antriebsausbildung der Lastplatte an der Antriebsausbildung der Betonschraube angreift oder in die Antriebsausbildung der Betonschraube eingreift, so dass von der Lastplatte auf die Betonschraube ein Drehmoment zum Einschrauben oder Ausschrauben des Gewindes der Betonschraube übertragbar ist.

2. Vorrichtung nach Anspruch 1, **dadurch gekennzeichnet, dass** die mittige Antriebsausbildung der Lastplatte und die Antriebsausbildung der Betonschraube so ausgebildet sind, dass die Lastplatte relativ zum Schraubenschaft um Kippachsen senkrecht zur Mittelängsachse des Schraubenschafts um einen kleinen Winkel, insbesondere um einen Winkel zwischen +zehn Grad und -zehn Grad, verkippt werden kann.

3. Vorrichtung nach Anspruch 1 oder 2, **dadurch gekennzeichnet, dass** die Betonschraube, insbesondere der Kopf der Betonschraube, einen Auflageflansch zum Auflegen der Lastplatte aufweist, wobei der Auflageflansch auf seiner, der Lastplatte zugewandten Seite konvex abgerundet ausgebildet ist.

4. Vorrichtung nach einem der vorstehenden Ansprüche, **dadurch gekennzeichnet, dass** die mittige Antriebsausbildung der Lastplatte und die Antriebsausbildung der Betonschraube so ausgebildet sind, dass bei Belastung der Lastplatte in Richtung auf das Gewinde des Schraubenschafts zu, sich die mittige Antriebsausbildung der Lastplatte und die Antriebsausbildung der Betonschraube zu einem spielfreien Zustand hin verklemmen.

5. Vorrichtung nach wenigstens einem der vorstehenden Ansprüche, **dadurch gekennzeichnet, dass** die mittige Antriebsausbildung der Lastplatte als Innenmehrkant, insbesondere Innensechskant, Innenvielrund, Innenvielzahn oder Innenstern und die Antriebsausbildung des Schraubenkopfs der Betonschraube als Außenmehrkant, insbesondere Außensechskant, Außenvielrund, Außenvielzahn oder Außenstern ausgebildet ist.

6. Vorrichtung nach einem der vorstehenden Ansprüche, **dadurch gekennzeichnet, dass** die Lastplatte, insbesondere die mittige Antriebsausbildung der Lastplatte, so ausgebildet ist, dass eine dem Schraubenschaft gegenüberliegende Oberseite der Lastplatte oberhalb einer Oberseite des Schraubenkopfes angeordnet ist.

7. Vorrichtung nach wenigstens einem der vorstehenden Ansprüche, **dadurch gekennzeichnet, dass** die Lastplatte eine äußere Antriebsausbildung an ihrem Außenumfang aufweist.

8. Vorrichtung nach wenigstens einem der vorstehenden Ansprüche, **dadurch gekennzeichnet, dass** die Lastplatte aus Stahl, insbesondere nichtrostender Stahl oder verzinkter Stahl, aus Nichteisenmetallen, insbesondere Aluminium, aus Kunststoff, aus Holzwerkstoff, insbesondere Kunstharzpressholz, Furnierschichtholz oder dergleichen, besteht.

9. Vorrichtung nach wenigstens einem der vorstehenden Ansprüche, **dadurch gekennzeichnet, dass** der Schraubenschaft abschnittsweise von einem schlauchartigen Element aus elastisch und/oder plastisch deformierbarem Material, insbesondere Kunststoff oder Gummi, umgeben ist, um zwischen einem Fundament und einer Unterseite des Schraubenkopfes und/oder einer Unterseite der Lastplatte im montierten Zustand eine Abdichtung gegenüber aufsteigender Feuchtigkeit bereitzustellen.

10. Vorrichtung nach wenigstens einem der vorstehenden Ansprüche, **dadurch gekennzeichnet, dass** die Lastplatte auf ihrer Oberseite mit reibungserhöhenden Elementen, insbesondere Vorsprüngen, versehen ist.

11. Vorrichtung nach wenigstens einem der vorstehenden Ansprüche, **dadurch gekennzeichnet, dass** die Lastplatte auf ihrer Oberseite mit einer Abdichtung, insbesondere einer Dichtfolie oder Dichtscheibe, versehen ist.

12. Vorrichtung nach wenigstens einem der vorstehenden Ansprüche, **dadurch gekennzeichnet, dass** ein Positionierkonus (112) vorgesehen ist, der auf einer Oberseite der Lastplatte (14) angeordnet ist, wobei die Oberseite der Lastplatte (14) zum Aufliegen eines Bauteils (118, 126, 148) vorgesehen ist, wobei sich der Positionierkonus (112) in einer Richtung von der Oberseite der Lastplatte (14) weg verjüngt.

13. Vorrichtung nach Anspruch 12, **dadurch gekennzeichnet, dass** der Positionierkonus mit einem kreiszylindrischen Vorsprung (114) versehen ist, der von dem Ende des Positionierkonus (112) mit kleinerem Durchmesser ausgeht und der konzentrisch zu einer Mittellängsachse des Positionierkonus (112) angeordnet ist.

14. Anordnung mit wenigstens zwei Vorrichtungen nach wenigstens einem der vorstehenden Ansprüche, einem Bauteil und einem Fundament, **dadurch gekennzeichnet, dass** das Bauteil mit einer Unterseite auf Oberseiten der wenigstens zwei Lastplatten aufliegt und dass die Betonschrauben der Vorrichtungen in das Fundament eingreifen.

15. Anordnung nach Anspruch 14, **dadurch gekennzeichnet, dass** wenigstens eine der Lastplatten in einem von 90 Grad abweichenden Winkel zu dem Schraubenschaft der der Lastplatte zugeordneten Betonschraube angeordnet ist, wobei insbesondere auf wenigstens einer der Lastplatten (14) ein Positionierkonus (112) vorgesehen ist und wobei das Bauteil (118, 126, 148) mit wenigstens einer kegelstumpfförmigen Ausnehmung (122) versehen ist, wobei die kegelstumpfförmige Ausnehmung (122) von einer Unterseite des Bauteils (118, 126, 148) ausgeht, wobei der Positionierkonus (112) in der kegelstumpfförmigen Ausnehmung (120) aufgenommen ist.
